# EUROPÄISCHE PATENTSCHRIFT

(11) **EP 2 663 823 B1**
(45) Veröffentlichungstag und Bekanntmachung des Hinweises auf die Patenterteilung: **15.03.2017**
(21) Anmeldenummer: 12700478.6
(22) Anmeldetag: 13.01.2012
(51) Int. Cl.: H01M 10/625, H01M 10/663, H01M 10/613, B60H 1/32, F25B 41/06, F28D 9/00, F28F 9/02, F25B 39/02, F28F 27/02, F28D 1/03

(54) **WÄRMEÜBERTRAGER**
HEAT EXCHANGER
ÉCHANGEUR THERMIQUE

(30) Priorität: 14.01.2011 DE 102011008653
(43) Veröffentlichungstag der Anmeldung: 20.11.2013
(73) Patentinhaber: MAHLE Behr GmbH & Co. KG, 70469 Stuttgart (DE)
(72) Erfinder: WESNER, Markus, 70372 Stuttgart (DE); HERRMANN, Hans-Georg, 66132 Saarbrücken (DE); KLEIN, Peter, 67718 Schmalenberg (DE); HIMMER, Thomas, 73326 Reichenbach (DE)
(74) Vertreter: Grauel, Andreas
(86) Internationale Anmeldenummer: PCT/EP2012/050529
(87) Internationale Veröffentlichungsnummer: WO 2012/095531

(56) Entgegenhaltungen:
- EP-A1- 1 850 082
- DE-A1- 3 020 557
- DE-A1- 19 712 599
- DE-A1-102010 012 869
- DE-C1- 19 523 475
- FR-A1- 2 870 588

## Beschreibung

Die Erfindung betrifft einen Wärmeübertrager gemäß dem Oberbegriff des Anspruches 1, ein System für ein Kraftfahrzeug zum Erwärmen und/oder Kühlen einer Batterie gemäß dem Oberbegriff des Anspruches 11 und eine Kraftfahrzeugklimaanlage gemäß dem Oberbegriff des Anspruches 12. DE 197 12 599 A1 offenbart einen derartigen Wärmeübertrager.

Batterien von Hybrid- oder Elektrofahrzeugen müssen erwärmt oder gekühlt werden, um eine ausreichende Betriebstemperatur der Batterie, beispielsweise in einem Temperaturbereich zwischen 0°C und 40°C, zu erhalten. Bei einer Entnahme oder Laden von elektrischer Energie aus der Batterie gibt die Batterie Wärme ab, so dass die Batterie gekühlt werden muss, damit sich diese nicht auf Temperaturen von mehr als 30°C oder 40°C erwärmt. Bei geringen Außentemperaturen, die beispielsweise unterhalb von 0°C liegen, ist ein Erwärmen der Batterie erforderlich, damit elektrische Energie von der Batterie entnommen werden kann als auch eine Aufladung mit elektrischer Energie möglich ist. Hierzu weist das Hybrid- oder Elektrofahrzeug einen Kühlmittelkreislauf auf mit dem die Batterie gekühlt und vorzugsweise erwärmt werden kann.

Die DE 101 28 164 A1 zeigt ein Fahrzeug-Kühlsystem für ein Elektro- oder Hybridfahrzeug. Das Fahrzeug-Kühlsystem weist einen Kühlmittelkreislauf auf, der thermisch mit einer Batterie gekoppelt ist. In den Kühlmitielltreislauf mit der Batterie ist ferner ein Verdampfer eines Kältekreises mit einem Kondensator, einem Kompressor und einem Expansionsventit eingebaut. Mittel des Verdampfers kann der Kühimittelkreislauf mit der Batterie gekühlt werden, so dass dadurch mittels des Kältekreises auch die Batterie gekühlt werden kann. Außerdem ist es bekannt, in einem derartigen Fahrzeug-Kühlsystem den Kühlmittelkreislauf für die Batterie mit einem Umgebungsluft-Wärmeübertrager zu koppeln, so dass bei niedrigen Außentemperaturen die Batterie durch Abgabe der Wärme an die Umgebungsluft gekühlt werden kann, ohne dass der Kältekreis in Betrieb ist.

Aus der DE 10 2008 017 113 A1 ist ein Verdampfer als Wärmeübertrager für ein Kraftfahrzeug bekannt. Eine Mehrzahl von Platten sind parallel zueinander in Hochrichtung gestapelt als Wärmeübertragers in Platten- bzw. Scheibenbauweise. Zwischen den Platten bildet sich ein erster Strömungsraum für Kältemittel als erstes Fluid und ein zweiter Strömungsraum für ein zweites Fluid, so dass Wärme von dem zweiten Fluid auf das Kältemittel übertragen werden kann.

Die DE 195 23 475 C1 zeigt einen Plattenwärmetauscher, insbesondere Ölkühler mit einem Stapel von Wärmetauscherplatten, die unter Bildung von getrennten Strömungskanälen für die wärmeaustauschenden Medien ineinander liegen und fügetechnisch verbunden sind und bei dem die Ein- und Austrittsmündungen für wenigstens das eine Medium auf der gleichen Seite des Plattenstapels liegen, mit in den Ein- und Ausströmkanälen vorgesehenen Einsätzen zur Strömungsumlenkung in Mäanderform, wobei der eine Einsatz den einen Ein- und Ausströmkanal im Wesentlichen sperrt und der andere Einsatz den anderen Ein- oder Ausströmkanal bereichsweise hülsenartig auskleidet, wobei die Einsätze als ein einziges Spritzgussteil hergestellt sind, die durch ein Verbindungsteil verbunden sind und, dass die Einsätze lösbar in dem Einströmkanal und in dem Ausströmkanal befestigt sind.

Die EP 2 107 328 A1 zeigt einen Verdampfer, insbesondere für ein Kraftfahrzeug, umfassend eine Mehrzahl von parallel zueinander in einer Hochrichtung gestapelten Platten mit fluchtend angeordneten Durchbrechungen zur Zuführung und Abführung eines als Kältemittel ausgebildeten ersten Fluids und eines zweiten Fluids, wobei zwischen zwei benachbarten Platten ein Strömungskanal erster Art zur Führung des ersten Fluids im Wechsel mit einem Strömungskanal zweiter Art zur Führung des zweiten Fluids ausgebildet sind, wobei eine wärmeübertragende Fläche der Platten eine Länge in Strömungsrichtung des Kältemittels und eine hierzu senkrechte Breite aufweist, wobei das Verhältnis der Länge zu der Breite nicht größer als etwa 1,3 ist.

Wärmeübertragers oder Chiller in Scheibenbauweisen werden in Systemen eingesetzt, um mit einem Kältekreis die Batterien von Hybrid- oder Elektrofahrzeugen zu kühlen. Dabei ist der Wärmeübertrager oder Chiller in Scheibenbauweise aufgebaut und umfasst eine Vielzahl von übereinander gestapelten Stapelscheiben, sodass sich zwischen den Stapelscheiben ein erster Fluidkanal für das Kältemittel und ein zweiter Fluidkanal für das Kühlmittel, zum Beispiel Wasser mit einem Frostschutzmittel, ausbildet. Das Kältemittel wird dabei durch wenigstens zwei, vorzugsweise wenigstens drei, Abschnitte des ersten Fluidkanals zwischen den Stapelscheiben in entgegengesetzter Richtung, das heißt mäanderförmig, durch den ersten Fluidkanal zwischen den Stapelscheiben geleitet. Dadurch ist die erste Einlaßöffnung und die erste Auslassöffnung für das Kältemittel an unterschiedlichen entgegengesetzten Seiten des Wärmeübertragers ausgebildet, zum Beispiel die *Ein*lassöffnung an der Abdeckplatte und die Auslassöffnung an einer Bodenplatte. Derartige Wärmeübertrager sind ferner mit einem thermischen Expansionsventil versehen. Bei dem thermischen Expansionsventil wird das in den Wärmeübertrager eingeleitete Kältemittel in seiner Durchflussmenge in Abhängigkeit von der Temperatur des aus dem Wärmeübertrager ausströmenden Kältemittels gesteuert, beispielsweise indem die Strömungsquerschnittsfläche eines Einströmkanals an dem Expansionsventil in Abhängigkeit von der Temperatur gesteuert wird, mit welcher das Kältemittel aus dem Wärmeübertrager ausströmt. Das thermische Expansionsventil benötigt damit somit sowohl einen Einströmkanal, welcher vorzugsweise in der Strömungsquerschnittsfläche veränderlich ist, und einen Ausströmkanal), durch welchen das aus dem Wärmeübertrager ausgeleitete Kältemittel durchgeleitet wird, damit von dem thermischen Expansionsventil die Temperatur des aus dem Wärmeübertrager ausströmenden Kältemittels an dem Ausströmkanal des Expansionsventils erfasst werden kann. Ist an dem Wärmeübertragers die Ein- und Auslassöffnung für das Kältemittel an zwei gegenüberliegenden Seiten ausgebildet, ist es erforderlich, dass in aufwendiger Weise mit *einem Rohr* das an der Auslassöffnung austretende Kältemittel zu dem thermischen Expansionsventil geleitet wird, falls das thermische Expansionsventil beispielsweise im Bereich der Einlassöffnung bzw. der Abdeckplatte ausgebildet ist. Dadurch benötigt der Wärmeübertrager bzw. Verdampfer mit dem thermischen Expansionsventil einen großen Bauraum aufgrund des Rohres, um das Kältemittel von einer Seite des Wärmeübertragers zu einer anderen Seite des Wärmeübertragers mit dem thermischen Expansiansventil zu leiten. Außerdem fallen dadurch bei der Herstellung des Wärmeübertragers mit dem thermischen Expansionsventil große Kosten an.

Die Aufgabe der vorliegende Erfindung besteht deshalb darin, einen Wärmeübertrager, ein System für ein Kraftfahrzeug zum Erwärmen und/oder Kühlen einer Batterie und eine Kraftfahrzeugklimaanlage zur Verfügung zu stellen, bei dem der Wärmeübertragers einen geringen Bauraum benötigt und einfach sowie preiswert in der Herstellung ist.

Diese Aufgabe wird gelöst mit einem Wärmeübertrager oder Chiller mit den Merkmalen des Anspruchs 1.

Durch den Wärmeübertragers oder Chiller wird das Kältemittel durch wenigstens zwei, vorzugsweise wenigstens drei, Abschnitte des ersten Fiuidkanats zwischen den Stapelscheiben mäanderförmig in entgegengesetzter Richtung geleitet. Weist das erste Fluid in dem ersten Fluidkanal zwischen den Stapelscheiben eine große Strömungsgeschwindigkeit auf, weil beispielsweise bei einer Ausbildung von drei Abschnitten die Summe der Strömungsquerschnittsflächen des ersten Fluidkanals zwischen sämtlichen Stapelscheiben nur ein Drittel der Summe der Strömungsquerschnittsflächen des ersten Fluidkanals zwischen den Stapelscheiben beträgt, Dadurch kann mit dem Wärmeübertrager auch bei einem geringen Bauraum eine große Wärmeübertragung von dem ersten Fluid auf das zweite Fluid ermöglicht werden oder umgekehrt aufgrund der großen bzw. größeren Strömungsgeschwindigkeit des ersten Fluides. Die erste Ein- oder Auslassöffnung für das erste Fluid ist dabei durch ein Tauchrohr gebildet, sodass die erste Ein- und Auslassöffnung für das erste Fluid an der gleichen Seite des Wärmeübertragers, zum Beispiel nur an der Abdeckplatte oder nur an einer Bodenplatte, ausgebildet ist. In vorteilhafter Weise ist es somit nicht erforderlich, bei einer Verwendung oder einem Anbau eines thermischen Expansionsventils an dem Wärmeübertrager in aufwendiger Weise mit einem Rohr das aus dem Wärmeübertrager ausströmende Kältemittel von einer Seite des Wärmeübertragers zu einer anderen Seite des Wärmeübertragers mit dem thermischen Expansionsventil zu leiten. Dadurch kann Bauraum eingespart und die Kosten bei der Herstellung des Wärmeübertragers reduziert werden.

In einer zusätzlichen Ausführungsform ist das Tauchrohr unlösbar, insbesonderte stoffschlüssig, z. B. als Löt- *oder* Klebeverbindung*,* mit dem Wärmeübertrager verbunden und/oder durch das Tauchrohr ist das erste Fluid in einem Abstand (zu der Ein- oder Auslassöffnung) in den ersten Fluidkanal einleitbar. Der Abstand bezieht sich dabei nur auf diejenige Ein- oder Auslassöffnung, welche von dem Tauchrohr gebildet ist. Vorzugsweise ist der Wärmeübertrager ein Verdampfer und das erste Fluid ist ein Kältemittel und die Einlassöffnung ist von dem Tauchrohr gebildet; nicht jedoch die Auslassöffnung. Ein Ende des Tauchrohres bildet die Ein- oder Auslassöffnung für das erste Fluid und der Abstand ist der Abstand von der Ein- oder Auslassöffnung zu wenigstens einer Strömungsöffnung an dem Tauchrohr.

Eine Umlenkscheibe ist beispielsweise als eine Stapelscheibe ausgebildet, welche nur eine erste Durchbrechung anstelle von zwei Durchbrechungen aufweist, sodass dadurch das erste Fluid in dem Raum zwischen den entsprechenden ersten Durchbrechungen umgeleitet wird und dadurch den ersten Fluidkanal zwischen den Stapelscheiben in entgegengesetzter Richtung mäanderförmig durchströmt. Ein separates Dichtelement, zum Beispiel eine Dichtplatte oder eine Dichtlippe, schließt dabei eine erste Durchbrechung der Stapelscheibe ab, sodass dadurch mit einem zusätzlichen Bauteil an der Stapelscheibe eine erste Durchbrechung abgeschlossen ist

Die wenigstens eine Strömungsöffnung ist im Bereich oder am anderen Ende des Tauchrohres ausgebildet bezüglich eines ersten Endes des Tauchrohres mit der ersten Ein- oder Ausfassofifnung.

In einer zusätzlichen Variante ist die wenigstens eine Strömungsöffnung radial und/oder axial bezüglich einer Längsachse des Tauchrohres ausgebildet.

Zweckmäßig ist der Wärmeübertrager als ein Verdampfer mit einem, vorzugsweise thermischen, Expansionsventil ausgebildet und das erste Fluid ist ein Kältemittel und das zweite Fluid ist ein Kühlmittel, z. B. Wasser oder Luft.

In einer zusätzlichen Ausführungsform weist das thermische Expansionsventil sowohl einen Einströmkanal zum Einleiten des Kältemittels und einen Ausströmkanal zum Ausleiten des Kältemittels auf. Das thermische Expansionsventil umfasst ferner vorzugsweise eine Einrichtung zur Veränderung *der* Strömungsquerschnittsfläche des Einströmkanals in Abhängigkeit von der Temperatur des durch den Ausströmkanal an dem Expansionsventit geleiteten Kältemittels.

In einer ergänzenden Ausgestaltung ist das Expansionsventil mit einem Verbindungsflansch an dem übrigen Wärmeübertrager befestigt und der verbindungsflansch weist sowohl einen Einströmkanal zum Einleiten des Kältemittels und einen Ausströmkanal zum Ausleiten des Kältemittels auf.

In einer zusätzlichen Ausgestaltung ist das Expansionsventil, vorzugsweise unmittelbar, ohne einen Verbindungsflansch an dem übrigen Wärmeübertrager, zum Beispiel an einer Abdeckplatte oder an einer Bodenplatte, befestigt.

Vorzugsweise sind eine Verbindungsflansch-Auslassöffnung und der Ausströmkanal des Verbindungsflansches fluchtend zu der ersten Auslassöffnung an dem übrigen Wärmeübertrager ausgebildet und/oder der Ausstrcmkanal weist an dem Verbindungsflansch im Wesentlichen keine Umlenkung auf. Im Wesentlichen keine Umlenkung bedeutet, dass der Ausströmkanal keine Biegung oder Kurve zur Umlenkung des Kältemittel bzw. des ersten Fluids mit einer Umlenkung von wenigstens 20°, 10°, 5° oder 2° aufweist. Eine Umlenkung des durch den Ausströmkanal des Verbindungsflansches ausgeleiteten ersten Fluides, insbesondere Kältemittels, ist zu vermeiden, um einen unnötigen Druckverlust des ausströmenden Kältemittels zu vermeiden.

Der Wärmeübertrager bzw. der Stapel aus den Stapelscheiben wird stoffschlüssig mit Löten während eines Lötvorganges in einem Lötofen miteinander verbunden. Dabei kommt es zu einem Setzprozess der aufeinandergestapeiten Stapelscheiben, sodass dadurch die Ausdehnung bzw. Größe des Stapels senkrecht zu einer von den Stapelscheiben aufgespannten Ebene abnimmt. Während des Lötprozesses ist bereits auch das Tauchrohr an dem Wärmeübertrager bzw. innerhalb des Stapels angeordnet und wird ebenfalls stoffschlüssig mit dem Wärmeübertrager an dem Festlager verbunden. Ein Loslager ist erforderlich, damit der Stapel während des Lötprozesses den Setzprozess ausführen kann. Beispielsweise ist das Festlager an der Abdeckplatte ausgebildet und das Tauchrohr wird mittels einer Lotplattierung auf der Abdeckplatte und dem Tauchrohr beim Löten im Lötofen stoffschlüssig mit der Abdeckplatte verbunden. Im Gegensatz hierzu ist beispielsweise das Loslager an der Umlenkscheibe ausgebildet. Die Umlenkscheibe weist eine Öffnung auf, durch welche das Tauchrohr durchgeführt ist. Dabei ist sowohl an dem Tauchrohr als auch an der Umlenkscheibe im Bereich dieser Öffnung keine Lotplattierung vorhanden, sodass dadurch beim Löten im Lötofen keine stoffschlüssige Verbindung zwischen dem Tauchrohr *und* der Umlenkscheibe *entsteht* und dadurch ein Loslager zwischen dem Tauchrohr und der Öffnung der Umlenkscheibe entsteht.

In einer ergänzenden Ausführungsform umfasst der Wärmeübertrager eine Fixierungseinrichtung zur Befestigung des Wärmeübertragers und vorzugsweise ist die Fixierungseinrichtung von dem Verbindungsflansch gebildet. Abweichend hiervon kann die Fixierungseinrichtung auch als zusätzliches Bauteil in Ergänzung zu dem Verbindungsflansch bzw. dem Verbindungsblock ausgebildet sein. Beispielsweise ist eine derartige Fixierungseinrichtung stoffschlüssig mit Löten an der Abdeckplatte oder an der Bodenplatte befestigt. Die Fixierungseinrichtung als gesondertes Bauteil oder als Verbindungsflansch weist dabei wenigstens eine, vorzugsweise mehrere, Bohrungen auf und in diesen Bohrungen können Befestigungselemente, zum Beispiel Schrauben oder Bolzen, befestigt werden zur Fixierung des Wärmeübertragers an einem anderen Bauteil, zum Beispiel einer Karosserie eines Kraftfahrzeuges.

In einer zusätzlichen Ausführungsform liegt das Verhältnis zwischen der Strömungsquerschnittsfläche des Tauchrohres und der Strömungsquerschnittsfläche eines ersten Durchbruches außerhalb des Tauchrohres zwischen 0,1 und 0,6. Bei einer Verwendung des Wärmeübertragers als Verdampfer und somit bei einer Ausbildung des ersten Fluides als Kältemittel ist vorzugsweise das Tauchrohr an der ersten Einlassöffnung ausgebildet, sodass durch das Tauchrohr das flüssige Kältemittel in den Wärmeübertrager bzw. Verdampfer einströmt. Die Massenstromdichte ist somit im Tauchrohr groß, weil das Kältemittel noch nicht verdampft ist. Nach dem Ausleiten des Kältemittel an wenigstens einer Strömungsöffnung verdampft das Kältemittel beim Durchleiten durch den ersten Fluidkanal, sodass beim Durchströmen eines ersten Durchbruches außerhalb des Tauchrohres das Kältemittel wenigstens teilweise bereits verdampft ist und dadurch eine geringere Massenstromdichte aufweist. Aus diesem Grund ist es erforderlich, dass die Größe der Strömungsquerschnittsfläche des ersten Durchbruches außerhalb des Tauchrohres größer ist als die Strömungsquerschnittsfläche des Tauchrohres.

In einer weiteren Ausgestaltung bestehen die Komponenten des Wärmeübertragers, insbesondere das Tauchrohr, die Stapelscheiben, die Abdeckplatte, die Bodenplatte, der Verbindungsflansch und/oder das Expansionsventil wenigstens teilweise, insbesondere vollständig, aus Metall, insbesondere Stahl, Eisen oder Aluminium oder aus Buntmetall,

In einer ergänzenden Variante sind die Komponenten des Wärmeübertragers stoffschlüssig, insbesondere mittels Löten, miteinander verbunden.

Zweckmäßig weisen die Komponenten des Wärmeübertragers eine Plattierung mit Lot auf zur stoffschlüssigen Verbindung der Komponenten des Wärmeübertragers mittels Löten in einem Lötofen.

In einer zusätzlichen Ausführungsform weisen die Abdeckplatte und/oder die Bodenplatte eine größere, vorzugsweise um das wenigstens 1,5-, 2-, 3- oder 5-Fache größere, Dicke auf als die Stapelscheiben.

In einer weiteren Ausgestaltung ist die Länge des Tauchrohres kleiner als die Ausdehnung des Stapels senkrecht zu einer von den Stapelscheiben aufgespannten Ebene.

Zweckmäßig ist das Tauchrohr im Querschnitt kreisförmig, ellipsenförmig, mehreckig, z. B. drei- oder viereckig, insbesondere quadratisch, ausgebildet.

In einer weiteren Variante weist das Tauchrohr in Längsrichtung eine unterschiedliche Strömungsquerschnittsfläche, z. B. mit einer Abweichung von mehr als 5%, 10% oder 20%, auf.

In einer zusätzlichen Ausgestaltung ist die Summe der Strömungsquerschnittsfläche der wenigstens einen Strömungsöffnung des Tauchrohres kleiner, vorzugsweise um mehr als 5%, 10% oder 20% kleiner, als die Strömungsquerschnittsfläche des Tauchrohres. Dies führt zu einer Mikrodrosselung beim Ausströmen des Kältemittels aus dem Tauchrohr und damit zu einer besseren Verteilung durch Zerstäubung des Kältemittels beim Austreten aus dem Tauchrohr.

Erfindungsgemäßes System für ein Kraftfahrzeug zum Erwärmen und/oder Kühlen einer Batterie und vorzugsweise eines Kraftfahrzeuginnenraumes, umfassend einen Kühlmittelkreislauf zum Kühlen der Batterie und vorzugsweise des Kraftfahrzeuginnenraumes, einen Kältekreis mit einem Kondensator, einem Verdichter, einem Expansionsventil, vorzugsweise einem ersten Verdampfer zum Kühlen des Kraftfahrzeuginnenraumes und einem zweiten Verdampfer zum Kühlern der Batterie, indem der zweite Verdampfer als Wärmeübertrager mit dem Kühlmittelkreislauf thermisch gekoppelt ist und wobei der Wärmeüberfrager als ein in dieser Schutzrechtsanmeldung beschriebener Wärmeübertrager ausgebildet ist.

Zweckmäßig sind die Stapelscheiben des Wärmeübertragers zu einem Block aus übereinander gestapelten Stapelscheiben angeordnet.

In einer Variante sind die Stapelscheiben im Wesentlichen, z. B. mit einer Abweichung von weniger als 10°, 5° oder 2°, parallel übereinander angeordnet.

Vorzugsweise umfasst der Wärmeübertrager wenigstens 5, 6, 10, 20, 30, 38, 50, 56 oder 68 Stapefscneiben.

Eine erfindungsgemäße Kraftfahrzeugklimaanlage umfasst ein in dieser Schutzrechtsanmeldung beschriebenes System und/oder die Kraftfahrzeugklimaanlage umfasst einen in dieser Schutzrechtsanmeldung beschriebenen Wärmeübertrager.

Im Nachfolgenden werden Ausführungsbeispiele der Erfindung unter Bezugname auf die beigefügten Zeichnungen näher beschrieben. Es zeigt:
- Fig. 1: eine perspektivische Schnittansicht eines Wärmeübertragers in einem ersten Ausführungsbeispiel mit einem Expansionsventil,
- Fig. 2: eine perspektivische Schnittansicht des Wärmeübertragers in einem zweiten Ausführungsbeispiel mit dem Expansionsventil,
- Fig. 3: eine weitere perspektivische Schnittansicht des Wärmeübertragers gemäß Fig. 2 ohne Expansionsventil,
- Fig. 4: eine weitere perspektivische Ansicht des Wärmeübertragers gemäß Fig. 2 mit Expansionsventil,
- Fig. 5: eine Lagerung bzw. Verbindung in einem ersten Ausführungsbeispiel eines Tauchrohres an einer Umlenkscheibe,
- Fig. 6: eine Lagerung bzw. Verbindung in einem zweiten Ausführungsbeispiel des Tauchrohres an der Umlenkscheibe,
- Fig. 7: eine Lagerung bzw. Verbindung in einem dritten Ausführungsbeispiel des Tauchrohres an der Umlenkscheibe,
- Fig. 8: eine Lagerung bzw. Verbindung in einem vierten Ausführungsbeispiel des Tauchrohres an der Umlenkscheibe,
- Fig. 9: eine Lagerung bzw. Verbindung in einem fünften Ausführungsbeispiel des Tauchrohres an der Umlenkscheibe und
- Fig. 10: eine Lagerung bzw. Verbindung in einem sechsten Ausführungsbeispiel des Tauchrohres an der Umlenkscheibe.

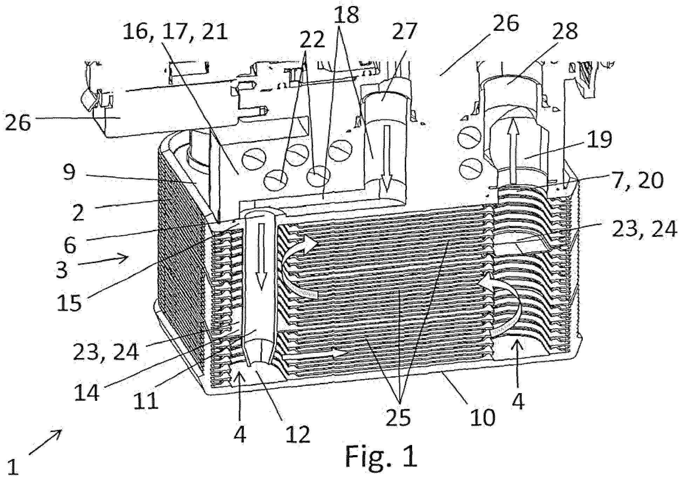

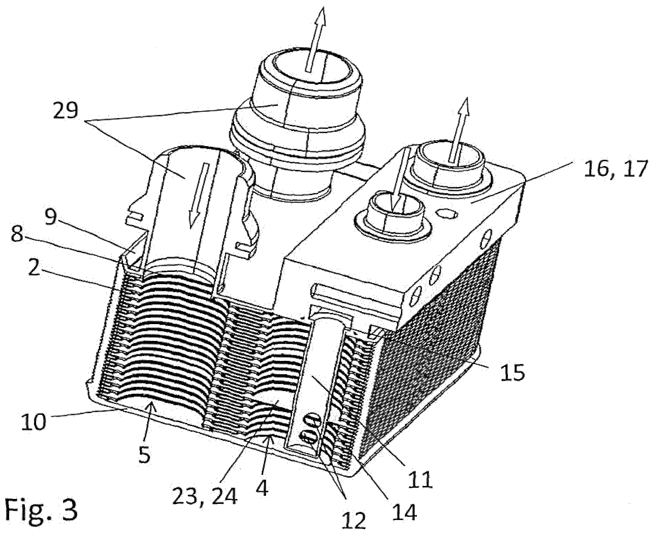

Der in Fig 1 in einer Seitenansicht dargestellte Wärmeübertrager 1 oder Chiller 1 wird in einem nicht dargestellten System zum Erwärmen und/oder Kühlen einer Batterie eines Kraftfahrzeugs als Hybrid- oder Elektrofahrzeug eingesetzt. Der Wärmeübertrager 1 ist dabei als Wärmeübertragers 1 in Scheibenbauweise ausgeführt. Eine Vielzahl von Stapelscheiben 2 mit ersten und zweiten Durchbrechungen 4, 5 bzw. Öffnungen 4, 5 sind übereinander zu einem Stapel 3 aufgestapelt. Dadurch bildet sich zwischen den Stapelscheiben 2 ein erster Fluidkanal und ein zweiter Fluidkanal zum Durchreiten eines Fluids auf. Dadurch kann Wärme von dem ersten Fluid auf das zweite Fluid übertragen werden oder umgekehrt. Die ersten Durchbrechungen 4 bilden ebenfalls den ersten Fluidkanal, durch welchen das erste Fluid in den ersten Fluidkanal zwischen den Stapelscheiben 2 ein- und ausströmt. Dies gilt analog auch für den zweiten Fluidkanal bzw. die zweiten Durchbrechungen 5. Das obere Ende des Stapels 3 aus den Stapelscheiben 2 gemäß der Darstellung in Fig. 1 ist oben von einer Abdeckplatte 9 abgeschlossen und unten ist der Stapel 3 von einer Bodenplatte 10 abgeschlossen. Die Abdeckplatte 9 und Bodenplatte 10 weisen dabei eine größere Dicke auf als die Stapelscheiben 2. Auch die Abdeckplatte 9 weist erste Durchbrechungen 4 bzw. Öffnungen und zweite Durchbrechungen 5 bzw. Öffnungen 5 zum Durchleiten des ersten und zweiten Fluides auf. Die beiden ersten Durchbrechungen 4 sind dabei ausschließlich an der Abdeckplatte 9 und nicht an *der* Bodenplatte 10 ausgebildet, so dass die beiden ersten Durchbrechungen 4 an einer Seite des Stapels 3 ausgebildet sind. Eine erste Durchbrechung 4 bildet eine erste Einlassöffnung 6 für das erste Fluid, hier Kältemittel, und eine weitere erste Durchbrechung 4 an der Abdeckplatte 9 bildet eine erste Auslaßöffnung 7 für das Kältemittel. Analog bildet eine zweite Einlassöffnung 8 (Fig. 3) und eine zweite Auslassöffnung (nicht dargestellt) an der Abdeckplatte 9 die Ein- und Auslassöffnung 8 für das zweite Fluid. Das zweite Fluid wird durch den zweiten Fluidkanal zwischen den Stapelscheiben 2 ohne Umlenkung und nicht mäanderförmig in nur einer Strömungsrichtung durch den zweiten Fluidkanal geleitet.

Die erste Durchbrechung 4 an der Abdeckplatte 9, welche eine erste Einlassöffnung 6 für das Kältemittel bildet, weist dabei ein Tauchrohr 11 auf. Das Tauchrohr 11 ist dabei stoffschlüssig mittels einer Lötverbindung an der Abdeckplatte 9 im Bereich der ersten Durchbrechung 4 bzw. der ersten Einlassöffnung 6 befestigt. Dabei stellt diese Befestigung des Tauchrohres 11 an der Abdeckplatte 9 ein Festlager 15 für das Tauchrohr 11 dar. Das Kältemittel wird durch den ersten Fluidkanal zwischen den Stapelscheiben 2 durch drei Abschnitte 25 in entgegengesetzter Richtung mäanderförmig durch den ersten Fluidkanal zwischen den Stapelscheiben 2 geleitet. Hierzu ist es erforderlich, dass die ersten Durchbrechungen 4 der Stapelscheiben 2 an zwei Stellen verschlossen sind. Hierzu weisen zwei Stapelscheiben 2 keine ersten Durchbrechungen 4 auf und bilden damit eine Umlenkscheibe 24 als Umlenkeinrichtung 23. In Fig. 1 sind an den in Fig. 1 dargestellten linken ersten Durchbrechungen 4 eine untere Umlenkscheibe 24 vorhanden, welche die linken ersten Durchbrechungen 4 abtrennt und es ist an den rechten ersten Durchbrechungen 4 eine obere Umlenkscheibe 24 vorhander, welche an einer Stelle den Raum von den rechten ersten Durchbrechungen 4 ausgebildeten ersten Fluidkanal abtrennt. Die untere Umlenkscheibe, 24 weist dabei eine Öffnung auf, durch welche das Tauchrohr 11 durchgeführt ist. Ein unteres Ende des Tauchrohres 11 weis dabei eine axiale Strömungsöffnung 12 auf, durch welche das an der ersten Einlassöffnung 6 eingeleitete flüssige Kältemittel aus dem Tauchrohr 11 ausströmt in den ersten Fluidkanal unterhalb der Umlenkscheibe. Nach dem Ausströmen aus der Strömungsöffnung 12 strömt das Kältemittel von links nach rechts durch den untersten Abschnitt 25, wird anschließend in dem ersten Fluidkanal im Bereich der rechten ersten Durchbrechungen 4 umgeleitet und strömt anschließend in entgegengesetzter Richtung durch den mittleren Abschnitt 25 des ersten Fluidkanals. Anschließend wird das Kältemittel an den linken ersten Durchbrechungen 4 oberhalb der Umlenkscheibe 24 und außerhalb des Tauchrohres 11 wiederum umgeleitet und strömt durch den obersten Abschnitt 25 und anschließend aus dem obersten Abschnitt 25 in den ersten Fluidkanal oberhalb der oberen Umlenkscheibe 24 in die rechten ersten Durchbrechungen 4 und anschließend aus der ersten Auslassöffnung 7 aus dem Wärmeübertragers 1 bzw. dem Stapel 3 aus den Stapelscheiben 2 wieder aus. Die Verbindung zwischen dem Tauchrohr 11 und der Umlenkscheibe 24 ist dabei als ein Loslager 14 ausgebildet, sodass dadurch in Richtung einer Längsachse 13 des Tauchrohres 11 das Tauchrohr 11 beweglich zu der Umlenkscheibe 24 als Loslager 14 ist. Die Strömungsöffnung 12 des Tauchrohres 11 ist dabei axial zu der Längsachse 13 des Tauchrohres 11 ausgebildet.

Auf der Abdeckplatte 9 ist mittels einer Lötverbindung ein Verbindungsflansch 16 bzw. ein Verbindungsblock 17 aus Metall befestigt. Der Verbindungsflansch 16 weist dabei einen Einströmkanal 18 zum Einleiten des Kältemittels in den Wärmeübertragers 1 auf und einen Ausströmkanal 19 zum Ausleiten des Kältemittels aus dem Wärmeübertrager 1 auf. Dabei ist der Ausströmkanal 19 fluchtend zu der ersten Auslassöffnung 7 ausgebildet und der Einströmkanal 18 weist zwei Biegungen bzw. Kurven als Umlenkstellen von *ungefähr* 90° auf. Ferner ist auch eine Verbindungsflansch-Auslassöffnung 20 als Ende des Ausströmkanals 19 fluchtend zu der ersten Auslassöffnung 7 an einer Stapelscheibe 7 bzw. an der Abdeckplatte 9 ausgebildet, Dabei stelit die erste Auslassöffnung 7 auch eine rechte erste Durchbrechung 4 dar. Der Verbindungsblock 17 ist auch eine Fixierungseinrichtung 21 zur Befestigung des Wärmeübertragers 1 an anderen Bauteilen, zum Beispiel einer Karosserie eines Kraftfahrzeugs (nicht dargestellt). Hierzu weist die Fixierungseinrichtung 21 bzw. der Verbindungsflansch 16 mehrere Bohrungen 22 auf. Durch diese Bohrungen 22 kann mittels Schrauben oder Bolzen (nicht dargestellt) in den Bohrungen 20 eine mechanische Verbindung zwischen der Fixierungseinrichtung 21 und einem anderen Bauteil hergestellt werden. Abweichend von der stoffschlüssigen Lötverbindung zwischen dem Verbindungsblock 17 und der Abdeckplatte 9 kann der Verbindungsflansch 16 auch mit einer nicht dargestellten Schraubverbindung und wenigstens einer O-Ring-Dichtung fluiddicht mit der Abdeckplatte 9 verbunden werden.

Auf dem Verbindungsflansch 16 ist ein thermisches Expansionsventil 26 mit einem Einströmkanal 27 und einem Ausströmkanal 28 befestigt. Das Expansionsventil 26 ist dabei fluiddicht mit dem Verbindungsflansch 16 verbunden, beispielsweise mit einer stoffschlüssigen Fügeverbindung, zum Beispiel einer Laser- oder Piasmaschweißung, einer Lötverbindung oder einem anderen Fügeverfahren, wie Kleben oder Umformen. Abweichend hiervon kann auch das Expansionsventil 26 mit einer Schraub- oder Nietverbindung an dem Verbindungsflansch 16 befestigt sein und mittels wenigstens einer O-Ringdichtung besteht eine fluiddichte Verbindung zwischen dem Expansionsventil 26 und dem Verbindungsflansch 16 (nicht dargestellt). Dabei mündet fluchtend der Einströmkanaf 18 des Verbindungsflansches 16 in den Einströmkanal 27 des Expansionsventils 26 und der Ausströmkanal 19 des Verbindungsflansches 16 mündet fluchtend in den Ausströmkanal 28 des thermischen Expansionsventils 26.

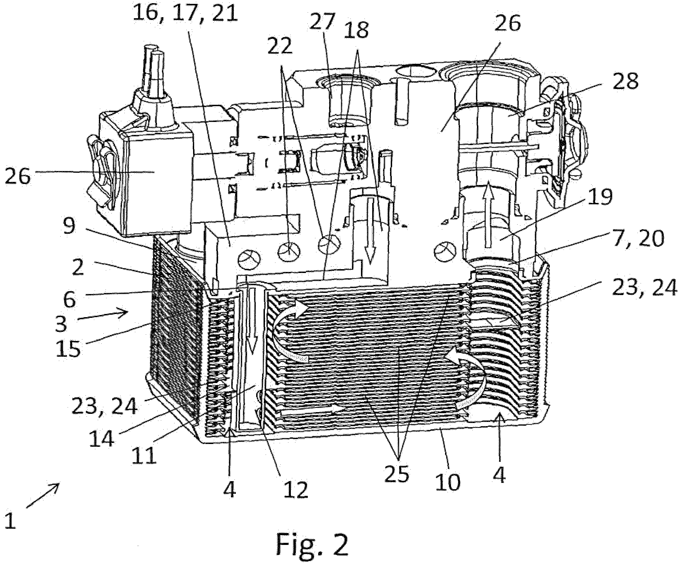

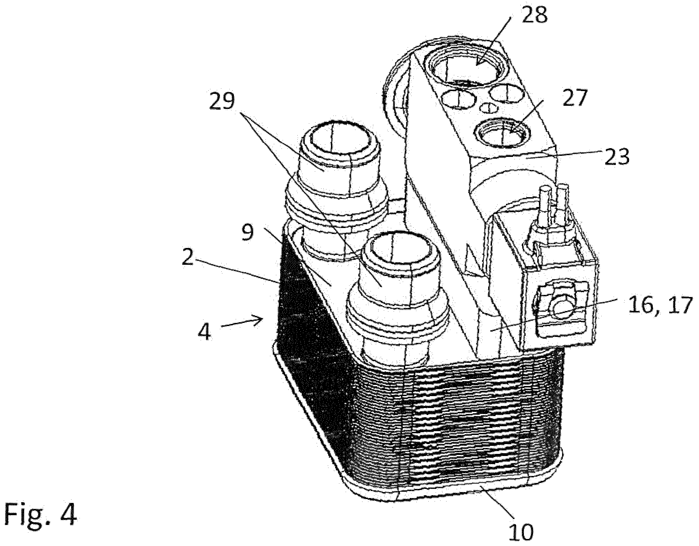

In den Fig. 2 bis 4 ist ein zweites Ausführungsbeispiel des Wärmeübertragers 1 dargestellt. Im Nachfolgenden werden im Wesentlichen nur die Unterschiede zu dem ersten Ausführungsbeispiel gemäß Fig. 1 beschrieben. Das Tauchrohr 11 weist zwei radiale Strömungsöffnungen 12 auf. Durch die beiden radialen Strömungsöffnungen 12 bezüglich der Längsachse 13 strömt das Kältemittel in den ersten Fluidkanal unterhalb der Umlenkscheibe 29 an den linken ersten Durchbrechungen 4 ein. In Fig. 3 sind ferner zwei Kühlmittelstutzen 29 zum Ein- und Ausleiten des Kühlmittel, zum Beispiel Wasser mit einem Frostschutzmittet, dargestellt. An den Kühlmittelstutzen 29 sind fluchtend mit dem Kühlmittelstutzen 24 an den Stapelscheiben 2 zweite Durchbrechungen 5 ausgebildet. In Fig. 3 sind dabei diejenigen zweiten Durchbrechungen 5 dargestellt, durch welche das Kühlmittel in den Wärmeübertrager 1 eingeleitet wird.

In einem weiteren, nicht dargestellten Ausführungsbeispiel des Wärmeübertragers 1 mit dem thermischen Expansionsventil 26, ist das Expansionsventil 26 ohne den Verbindungsflansch 16 an der Abdeckplatte 9, zum Beispiel mittels einer Lötverbindung, befestigt. Dabei ist die erste Auslassöffnung 7 an dem Stapel 3 aus Stapelscheiben 2 mit der Abdeckplatte 9 und der Bodenplatte 10 als übrigen Wärmeübertrager 1 fluchtend zu dem Ausströmkanal 28 des Expansionsventils 26 ausgebildet. Das durch den Einströmkanal 27 in das Expansionsventil 26 eingeleitete flüssige Kältemittel wird dabei nach dem Durchströmen durch den Einströmkanal 27 durch ein zusätzliches Kältemittelrohr von dem Ende des Einströmkanals 27 zu der ersten Einlassöffnung 6 bzw. dem Tauchrohr 11 geleitet. Dieses zusätzliche Kältemittelrohr als separates Bauteil weist dabei eine geringe Größe oder Ausdehnung auf, weil keine Umlenkung des Kältemittels von einer Seite zur einer anderen Seite des übrigen Wärmeübertragers 1 erforderlich ist und entspricht in seiner Funktion dem Einströmkanal 18 des Verbindungsflansches 16 gemäß dem ersten und zweiten Ausführungsbeispiel.

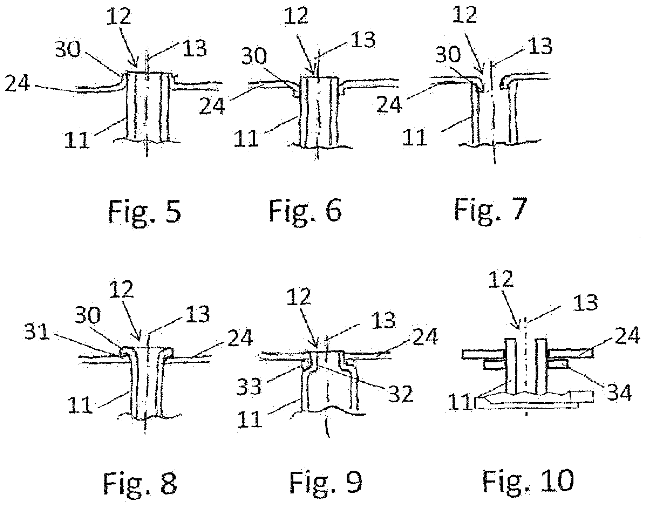

In den Fig. 5 bis 8 sind verschiedene Ausführungsbeispiele zur Verbindung bzw. Lagerung des Tauchrohres 11 an der Öffnung der Umlenkscheibe 24 dargestellt. Die Umlenkscheibe 24 weist im Bereich der Öffnung zur Durchführung des Tauchrohres 11 bzw. zum Durchleiten des Kältemittels durch die Umlenkscheibe 24 einen Einzug 30 nach oben, gemäß der Darstellung in Fig. 5, einen Einzug 30 nach unten, gemäß der Darstellung in Fig. 6, jeweils außenseitig, gemäß der Darstellung in Fig. 5 und 6, oder einen Einzug 30 nach unten innenseitig im Bereich der Strömungsöffnung 12 des Tauchrohres 11 auf, gemäß der Darstellung in Fig. 7. Ferner kann das Tauchrohr 11 auch mit einem Einzug 30 nach oben ausgebildet sein gemäß der Darstellung in Fig. 8 und dabei besteht eine Verrastung 31 zwischen der Umlenkscheibe 24 und dem Tauchrohr 11. In dem in Fig. 9 dargestellten Ausführungsbeispiel weist das Tauchrohr im Bereich des Endes an der Strömungsöffnung 12 eine Absetzung 32 auf und mittels der Absetzung 32 sowie einer zwischen der Absetzung 32 und der Umlenkscheibe 24 angeordneten Dichtringes 33 liegt das Tauchrohr 11 mittelbar mittels des Dichtringes 33 auf der Umlenkscheibe 24 auf. Gemäß der Darstellung in Fig. 10 ist das Tauchrohr 11 mittels einer Ringscheibe 34 an der Umlenkscheibe 24 verlötet. Bei einer derartigen, letztgenannten Verlötung liegt somit ein Festlager 15 zwischen dem Tauchrohr 11 und der Umlenkscheibe 24 vor.

Zum Kühlen einer nicht dargestellten Batterie eines Hybrid- oder Elektrofahrzeuges wird Kühlmittel, z. B. Wasser mit einem Frostschutzmittel oder Luft, als zweites Fluid zu den Batterien geleitet. An den Batterien nimmt das Kühlmittel Wärme von den Batterien auf und wird anschließend in einem Kreislauf zu dem Wärmeübertrager 1 geleitet. Das Kühlmittel durchströmt den zweiten Fluidkanal des Wärmeübertragers 1. Das Kältemittel des Kältekreises mit einem nicht dargestellten Verdichter und einem Kondensator strömt dabei ebenfalls durch den Wärmeübertrager 1, d. h. durch den ersten Fluidkanal des Wärmeübertragers 1.

Insgesamt betrachtet sind mit dem erfindungsgemäßen Wärmeübertrager 1 als Verdampfer bzw. Kältemittelverdampfer wesentliche Vorteile verbunden. Die erste Einlassöffnung 6 als auch die erste Auslassöffnung 7 zum Ein- und Ausleiten des Kältemittels in und aus dem Kältemittelverdampfer 1 ist dabei an einer Seite des Stapels 3 bzw. des übrigen Wärmeübertragers 1 ausgebildet, weil mit dem Tauchrohr 11 das Kältemittel von der Abdeckplatte 9 zu dem ersten Fluidkanal geleitet wird. Dadurch ist es beim Anbau eines thermischen Expansionsventils 26 und bei einer mäanderförmigen Durchleitung des Kältemittels durch den ersten Fluidkanal zwischen den Stapelscheiben 2 durch drei Abschnitte 25 nicht mehr erforderlich, das Kältemittel von einer Seite des Wärmeübertragers 1 zu dem thermischen Expansionsventil 26 an einer anderen Seite des Wärmeübertragers 1 mit einem langen Kältemittelrohr zu leiten. Dadurch kann Bauraum eingespart werden und die Kosten bei der Herstellung sind niedrig.

### Bezugszeichenliste

- 1: Wärmeübertrager, Chiller
- 2: Stapelscheibe
- 3: Stapel aus Stapelscheiben
- 4: Erste Durchbrechungen
- 5: Zweite Durchbrechungen
- 6: Erste Einlaßöffnung
- 7: Erste Auslaßöffnung
- 8: Zweite Einlassöffnung
- 9: Abdeckplatte
- 10: Bodenplatte
- 11: Tauchrohr
- 12: Strömungsöffnung
- 13: Längsachse des Tauchrohres
- 14: Loslage
- 15: Festlager
- 16: Verbindungsflansch
- 17: Verbindungsblock
- 18: Einströmkanal an Verbindungsflansch
- 19: Ausströmkanal an Verbindungsflansch
- 20: Verbindungsflansch-Auslassöffnung
- 21: Fixierungseinrichtung zur Befestigung des Wärmeübertragers
- 22: Bohrungen in Fixierungseinrichtung
- 23: Umlenkeinrichtung
- 24: Umlenkscheibe
- 25: Abschnitt des ersten Fluidkanales
- 26: Expansionsventil
- 27: Einströmkanal an Expansionsventil
- 28: Ausströmkanal an Expansionsventil
- 29: Kühlmittelstutzen
- 30: Einzug an Umlenkscheibe
- 31: Verrastung an Umlenkscheibe
- 32: Absetzung an Tauchrohr
- 33: Dichtring an Umlenkscheibe
- 34: Ringscheibe an Tauchrohr

## Patentansprüche

1. Wärmeübertrager (1) oder Chiller (1) in Scheibenbauweise, umfassend
- eine Vielzahl von übereinander gestapelten Stapelscheiben (2), so dass zwischen den Stapelscheiben (2) ein erster Fluidkanal für ein erstes Fluid und ein zweiter Fluidkanal für ein zweites Fluid ausgebildet ist,
- die Stapelscheiben (2) erste Durchbrechungen (4) als ersten Fluidkanal zur Zuführung und Abführung des ersten Fluides aufweisen,
- die Stapelscheiben (2) zweite Durchbrechungen (5) als zweiten Fluidkanal zur Zuführung und Abführung des zweiten Fluides aufweisen,
- wenigstens eine Umlenkeinrichtung (23), welche wenigstens eine erste Durchbrechung (4) verschließt, so dass das erste Fluid mäanderförmig durch wenigstens zwei, vorzugsweise wenigstens drei, Abschnitte (25) des ersten Fluidkanales zwischen den Stapelscheiben (2) in entgegengesetzter Richtung durch den Wärmeübertrager (1) geführt ist,
- eine erste Ein- und Auslassöffnung (6, 7) zur Ein- und Ausleitung des ersten Fluides,
- eine zweite Ein- und Auslassöffnung (8) zur Ein- und Ausleitung des zweiten Fluides,
wobei
die erste Ein- oder Auslassöifinung (6, 7) von einem Tauchrohr (11) gebildet ist und durch das Tauchrohr (11) das erste Fluid in den ersten Fluidkanal einleitbar ist, so dass die erste Ein- und Auslassöffnung (6, 7) an der gleichen Seite des Wärmeübertragers (1) ausgebildet sind, wobei
das Tauchrohr (11) die wenigstens eine Umlenkeinrichtung (23) durchstößt, so dass das durch das Tauchrohr (11) geleitete erste Fluid durch die wenigstens eine Umlenkeinrichtung (23) durchleitbar ist, und wobei
die wenigstens eine Umlenkeinrichtung (23) als eine Umlenkscheibe (24) ausgebildet ist, **dadurch gekennzeichnet, dass** das Tauchrohr (11) mit einem Loslager (14) und einem Festlager (15) an dem Wärmeübertrager (1) befestigt ist und an dem Loslager (14) das Tauchrohr (11) in Richtung der Längsachse (13) des Tauchrohres (11) zu dem Loslager (14) bewegbar ist, wobei das Loslager (14) von der Umlenkscheibe (24) gebildet und das Festlager an der Abdeckplatte (9) ausgebildet ist.

2. Wärmeübertrager nach Anspruch 1, **dadurch gekennzeichnet, dass** das Tauchrohr (11) unlösbar, insbesondere stoffschlüssig, z. B. als Löt- oder Klebeverbindung, mit dem Wärmeübertrager (1) verbunden ist und/oder durch das Tauchrohr (11) das erste Fluid in einem Abstand zu der Ein- oder Auslassöffnung (6, 7) in den ersten Fluidkanal einleitbar ist.

3. Wärmeübertrager nach einem oder mehreren der vorhergehenden Ansprüche, **dadurch gekennzeichnet, dass** das Tauchrohr (11) wenigstens eine Strömungsöffnung (12) zum Ein- oder Ausleiten des ersten Fluides in den ersten Fluidkanal an den ersten Durchbrechungen (4) aufweist.

4. Wärmeübertrager nach Anspruch 3, **dadurch gekennzeichnet, dass** die wenigstens eine Strömungsöffnung (12) radial und/oder axial bezüglich einer Längsachse (13) des Tauchrohres (11) ausgebildet ist.

5. Wärmeübertragers nach einem oder mehreren der vorhergehenden Ansprüche, **dadurch gekennzeichnet, dass** der Wärmeübertrager (1) als ein Verdampfer mit einem, vorzugsweise thermischen, Expansionsventil (26) ausgebildet ist und das erste Fluid ein Kältemittel ist und das zweite Fluid ein Kühlmittel, z. B. Wasser oder Luft, ist.

6. Wärmeübertrager nach Anspruch 5, **dadurch gekennzeichnet, dass** das thermische Exparisionsventil (26) sowohl einen Einströmkanal (27) zum Einleiten des Kältemittels und einen Ausströmkanal (28) zum Ausleiten des Kältemittels aufweist.

7. Wärmeübertrager nach Anspruch 5 oder 6, **dadurch gekennzeichnet, dass** das Expansionsventil (26) mit einem Verbindungsflansch (16, 17) an dem übrigen Wärmeübertrager (1) befestigt ist und der Verbindungsflansch (16, 17) sowohl einen Einströmkanal (18) zum Einleiten des Kältemittels und einen Ausströmkanal (19) zum Ausleiten des Kältemittel aufweist.

8. Wärmeübertrager nach Anspruch 7, **dadurch gekennzeichnet, dass** eine Verbindungsflansch-Auslassöffnung (20) und der Ausströmkanal (19) des Verbindungsflansches (16, 17) fluchtend zu der ersten Auslassöffnung (7) an dem übrigen Wärmeübertrager (1) ausgebildet sind und/oder der Ausströmkanal (19) an dem Verbindungsflansch (16, 17) im Wesentlichen keine Umlenkung aufweist.

9. Wärmeübertrager nach Anspruch 7, **dadurch gekennzeichnet, dass** der Wärmeübertrager (1) eine Fixierungseinrichtung (21) zur Befestigung des Wärmeübertragers (1) umfasst und vorzugsweise die Fixierungseinrichtung (21) von dem Verbindungsflansch (16, 17) gebildet ist.

10. Wärmeübertrager nach einem oder mehreren der vorhergehenden Ansprüche, **dadurch gekennzeichnet, dass** das Verhältnis zwischen der Strömungsquerschnittsfläche des Tauchrohres (11) und der Strömungsquerschnittsfläche eines ersten Durchbruches außerhalb des Tauchrohres (11) zwischen 0,1 und 0,6 liegt.

11. System für ein Kraftfahrzeug zum Erwärmen und/oder Kühlen einer Batterie und vorzugsweise eines Kraftfahrzeuginnenraumes, umfassend
- einen Kühlmittelkreislauf zum Kühlen der Batterie und vorzugsweise des Kraftfahrzeuginnenraumes,
- einen Kältekreis mit einem Kondensator, einem Verdichter, einem Expansionsventil, vorzugsweise einem ersten Verdampfer zum Kühlen des Kraftfahrzeuginnenraumes und einem zweiten Verdampfer zum Kühlen der Batterie, indem der zweite Verdampfer als Wärmeübertrager (1) mit dem Kühlmittelkreislauf thermisch gekoppelt ist und
**dadurch gekennzeichnet, dass**
der Wärmeübertrager (1) als ein Wärmeübertrager (1) gemäß einem oder mehrerer der vorhergehenden Ansprüche ausgebildet ist.

12. Kraftfahrzeugklimaanlage, **dadurch gekennzeichnet, dass** die Kraftfahrzeugklimaanlage ein System gemäß Anspruch 11 umfasst und/oder die Kraftfahrzeugklimaanlage einen Wärmeübertrager gemäß einem oder mehreren der Ansprüche 1 bis 10 umfasst.

## Claims

1. A heat exchanger (1) or chiller (1) of plate-type construction, comprising
- a multiplicity of stacking plates (2) stacked one on top of the other, such that between the stacking plates (2) there is formed a first fluid duct for a first fluid and a second fluid duct for a second fluid,
- the stacking plates (2) have first apertures (4) as a first fluid duct for the supply and discharge of the first fluid,
- the stacking plates (2) have second apertures (5) as a second fluid duct for the supply and discharge of the second fluid,
- at least one diverting device (23) which closes off at least one first aperture (4) such that the first fluid is conducted in opposite directions through the heat exchanger (1) in a meandering fashion through at least two, preferably at least three portions (25) of the first fluid duct between the stacking plates (2),
- a first inlet and outlet opening (6, 7) for conducting the first fluid in and out,
- a second inlet and outlet opening (8) for conducting the second fluid in and out,
wherein
the first inlet or outlet opening (6, 7) is formed by an immersion tube (11), and the first fluid can be conducted into the first fluid duct through the immersion tube (11) such that the first inlet and outlet opening (6, 7) are formed on the same side of the heat exchanger (1), wherein
the immersion tube (11) extends through the at least one diverting device (23) such that the first fluid conducted through the immersion tube (11) can be conducted through the at least one diverting device (23) ,
and wherein
the at least one diverting device (23) is in the form of a diverting plate (24), **characterised in that** the immersion tube (11) is fastened to the heat exchanger (1) by means of a loose mounting (14) and a fixed mounting (15), and at the loose mounting (14), the immersion tube (11) is movable relative to the loose mounting (14) in the direction of the longitudinal axis (13) of the immersion tube (11), wherein the loose mounting (14) is formed by the diverting plate (24) and the fixed mounting is formed on the cover panel (9).

2. The heat exchanger as claimed in claim 1, **characterised in that** the immersion tube (11) is connected non-detachably, in particular cohesively, for example by means of a soldered or adhesive connection, to the heat exchanger (1), and/or the first fluid can, through the immersion tube (11), be conducted into the first fluid duct at a distance from the inlet or outlet opening (6, 7).

3. The heat exchanger as claimed in one or more of the preceding claims, **characterised in that** the immersion tube (11) has at least one flow opening (12) for conducting the first fluid into or out of the first fluid duct at the first apertures (4).

4. The heat exchanger as claimed in claim 3, **characterised in that** the at least one flow opening (12) is formed radially and/or axially with respect to a longitudinal axis (13) of the immersion tube (11) .

5. The heat exchanger as claimed in one or more of the preceding claims, **characterised in that** the heat exchanger (1) is in the form of an evaporator with a preferably thermal expansion valve (26), and the first fluid is a refrigerant and the second fluid is a coolant, for example water or air.

6. The heat exchanger as claimed in claim 5, **characterised in that** the thermal expansion valve (26) has both an inflow duct (27) for conducting the refrigerant in and an outflow duct (28) for conducting the refrigerant out.

7. The heat exchanger as claimed in claim 5 or 6, **characterised in that** the expansion valve (26) is fastened by way of a connecting flange (16, 17) to the remainder of the heat exchanger (1), and the connecting flange (16, 17) has both an inflow duct (18) for conducting the refrigerant in and an outflow duct (19) for conducting the refrigerant out.

8. The heat exchanger as claimed in claim 7, **characterised in that** a connecting flange outlet opening (20) and the outflow duct (19) of the connecting flange (16, 17) are formed in alignment with the first outlet opening (7) on the remainder of the heat exchanger (1), and/or the outflow duct (19) on the connecting flange (16, 17) exhibits substantially no diversion.

9. The heat exchanger according to claim 7, **characterised in that** the heat exchanger (1) comprises a fixing device (21) for the fastening of the heat exchanger (1), and the fixing device (21) is preferably formed by the connecting flange (16, 17).

10. The heat exchanger according to one or more of the preceding claims, **characterised in that** the ratio between the flow cross-sectional area of the immersion tube (11) and the flow cross-sectional area of a first aperture outside the immersion tube (11) is between 0.1 and 0.6.

11. A system for a motor vehicle for heating and/or cooling a battery and preferably a motor vehicle interior, comprising
- a coolant circuit for cooling the battery and preferably the vehicle interior,
- a refrigerant circuit having a condenser, a compressor, an expansion valve, preferably a first evaporator for cooling the vehicle interior and a second evaporator for cooling the battery, by virtue of the second evaporator being thermally coupled, as a heat exchanger (1), to the coolant circuit, and **characterised in that**
the heat exchanger (1) is in the form of a heat exchanger (1) as claimed in one or more of the preceding claims.

12. A vehicle air-conditioning system, **characterised in that** the vehicle air-conditioning system comprises a system as claimed in claim 11 and/or the vehicle air-conditioning system comprises a heat exchanger as claimed in one or more of claims 1 to 10.

## Revendications

1. Echangeur de chaleur (1) ou refroidisseur (1) du type à plaques, comprenant
- une multiplicité de plaques (2) d'une pile, empilées les unes au-dessus des autres, de sorte qu'un premier conduit de fluide pour un premier fluide et un second conduit de fluide pour un second fluide sont formés entre les plaques (2) de la pile,
- les plaques (2) de la pile présentent des premiers passages (4) considérés comme le premier conduit de fluide servant à l'arrivée et à l'évacuation du premier fluide,
- les plaques (2) de la pile présentent des seconds passages (5) considérés comme le second conduit de fluide servant à l'arrivée et à l'évacuation du second fluide,
- au moins un dispositif de retour de flux (23) qui ferme au moins un premier passage (4), de sorte que le premier fluide est guidé, en forme de méandres, à travers l'échangeur de chaleur (1) suivant une direction opposée, en traversant au moins deux, de préférence au moins trois parties (25) du premier conduit de fluide se trouvant entre les plaques (2) de la pile,
- une première ouverture d'entrée et de sortie (6, 7) servant à l'introduction et à l'évacuation du premier fluide,
- une seconde ouverture d'entrée et de sortie (8) servant à l'introduction et à l'évacuation du second fluide,
où la première ouverture d'entrée ou de sortie (6, 7) est formée par un tube plongeur (11), et le premier fluide peut être introduit dans le premier conduit de fluide en traversant le tube plongeur (11), de sorte que la première ouverture d'entrée et de sortie (6, 7) est configurée sur le même côté de l'échangeur de chaleur (1),
où le tube plongeur (11) traverse le dispositif de retour de flux (23) au moins au nombre de un, de sorte que le premier fluide dirigé à travers le tube plongeur (11) peut être dirigé à travers le dispositif de retour de flux (23) au moins au nombre de un, et
où le dispositif de retour de flux (23) au moins au nombre de un est configuré comme une plaque de retour de flux (24), **caractérisé en ce que** le tube plongeur (11) est fixé sur l'échangeur de chaleur (1), par un palier libre (14) et par un palier fixe (15) et, au niveau du palier libre (14), le tube plongeur (11) peut être déplacé suivant la direction de l'axe longitudinal (13) du tube plongeur (11) menant jusqu'au palier libre (14), où le palier libre (14) est formé par la plaque de retour de flux (24), et le palier fixe est formé sur la plaque de recouvrement (9).

2. Echangeur de chaleur selon la revendication 1, **caractérisé en ce que** le tube plongeur (11) est assemblé avec l'échangeur de chaleur (1), de manière indétachable, en particulier par continuité de matière, en réalisant par exemple un assemblage brasé ou collé, et / ou le premier fluide, en traversant le tube plongeur (11), peut être introduit dans le premier conduit de fluide situé à distance de l'ouverture d'entrée ou de sortie (6, 7).

3. Echangeur de chaleur selon l'une quelconque ou plusieurs des revendications précédentes, **caractérisé en ce que** le tube plongeur (11) présente, au niveau des premiers passages (4), au moins une ouverture d'écoulement (12) servant à l'introduction ou à l'évacuation du premier fluide dans le premier conduit de fluide.

4. Echangeur de chaleur selon la revendication 3, **caractérisé en ce que** l'ouverture d'écoulement (12) au moins au nombre de un est formée radialement et / ou axialement par rapport à un axe longitudinal (13) du tube plongeur (11).

5. Echangeur de chaleur selon l'une quelconque ou plusieurs des revendications précédentes, **caractérisé en ce que** l'échangeur de chaleur (1) est conçu comme un évaporateur comportant un détendeur (26), de préférence thermique, et le premier fluide est un fluide frigorigène, tandis que le second fluide est un moyen de refroidissement, par exemple de l'eau ou de l'air.

6. Echangeur de chaleur selon la revendication 5, **caractérisé en ce que** le détendeur thermique (26) présente aussi bien un conduit d'entrée (27) servant à l'introduction du fluide frigorigène, qu'un conduit de sortie (28) servant à l'évacuation du fluide frigorigène.

7. Echangeur de chaleur selon la revendication 5 ou 6, **caractérisé en ce que** le détendeur (26) est fixé sur l'autre partie de l'échangeur de chaleur (1), par une bride d'assemblage (16, 17), et la bride d'assemblage (16, 17) présente aussi bien un conduit d'entrée (18) servant à l'introduction du fluide frigorigène, qu'un conduit de sortie (19) servant à l'évacuation du fluide frigorigène.

8. Echangeur de chaleur selon la revendication 7, **caractérisé en ce qu'**une ouverture de sortie (20) de la bride d'assemblage et le conduit de sortie (19) de la bride d'assemblage (16, 17) sont configurés sur l'autre partie de l'échangeur de chaleur (1), en étant alignés par rapport à la première ouverture de sortie (7) et / ou le conduit de sortie (19) ne présente, sur la bride d'assemblage (16, 17), pratiquement aucun retour de flux.

9. Echangeur de chaleur selon la revendication 7, **caractérisé en ce que** l'échangeur de chaleur (1) comprend un dispositif de fixation (21) servant à la fixation de l'échangeur de chaleur (1), et le dispositif de fixation (21) est formé de préférence par la bride d'assemblage (16, 17).

10. Echangeur de chaleur selon l'une quelconque ou plusieurs des revendications précédentes, **caractérisé en ce que** le rapport entre la surface de section d'écoulement du tube plongeur (11), et la surface de section d'écoulement d'un premier passage situé à l'extérieur du tube plongeur (11), est compris entre 0,1 et 0,6.

11. Système pour un véhicule automobile, servant à chauffer et / ou à refroidir une batterie et de préférence l'habitacle d'un véhicule automobile, ledit système comprenant
- un circuit d'un moyen de refroidissement servant au refroidissement de la batterie et de préférence de l'habitacle du véhicule automobile,
- un circuit frigorigène comprenant un condenseur, un compresseur, un détendeur, de préférence un premier évaporateur servant au refroidissement de l'habitacle du véhicule automobile, et comprenant un second évaporateur servant au refroidissement de la batterie, tandis que le second évaporateur, en tant qu'échangeur de chaleur (1), est couplé thermiquement au circuit du moyen de refroidissement, et
**caractérisé**
**en ce que** l'échangeur de chaleur (1) est conçu comme un échangeur de chaleur (1) selon l'une quelconque ou plusieurs des revendications précédentes.

12. Système de climatisation d'un véhicule automobile, **caractérisé en ce que** le système de climatisation du véhicule automobile comprend un système selon la revendication 11, et / ou le système de climatisation du véhicule automobile comprend un échangeur de chaleur selon l'une quelconque ou plusieurs des revendications 1 à 10.
